# FASCICULE DE BREVET EUROPEEN

(11) **EP 3 567 521 B1**
(45) Date de publication et mention de la délivrance du brevet: **23.08.2023**
(21) Numéro de dépôt: 19172659.5
(22) Date de dépôt: 03.05.2019
(51) Int. Cl.: G06V 40/19, G06V 40/40, G06V 40/18, G06V 10/46

(54) **PROCÉDÉ DE RECONNAISSANCE BIOMÉTRIQUE À PARTIR DES IRIS**
BIOMETRISCHES ERKENNUNGSVERFAHREN ANHAND DER IRIS
IRIS BIOMETRIC RECOGNITION METHOD

(30) Priorité: 09.05.2018 FR 1853975
(43) Date de publication de la demande: 13.11.2019
(73) Titulaire: Idemia Identity & Security France, 92400 Courbevoie (FR)
(72) Inventeur: KRICHEN, Emine, 92400 COURBEVOIE (FR); BEAUDET, Jean, 92400 COURBEVOIE (FR); LE GOUIL, Elise, 92100 COURBEVOIE (FR)
(74) Mandataire: Idemia

(56) Documents cités:
- US-A1- 2017 103 276
- US-A1- 2018 005 009
- KEN HUGHES ET AL: "Detection of Contact-Lens-Based Iris Biometric Spoofs Using Stereo Imaging", 2013 46TH HAWAII INTERNATIONAL CONFERENCE ON SYSTEM SCIENCES, 1 janvier 2013 (2013-01-01), pages 1763-1772, XP055538244, DOI: 10.1109/HICSS.2013.172 ISBN: 978-0-7695-4892-0

## Description

La présente invention concerne le domaine de la biométrie et plus particulièrement la reconnaissance biométrique à partir des iris.

### ETAT DE LA TECHNIQUE

Il existe des procédés de reconnaissance biométrique comprenant les étapes de :
- capturer une image d'un iris d'un individu ;
- extraire de l'image des caractéristiques biométriques ;
- comparer les caractéristiques biométriques extraites à des caractéristiques biométriques mémorisées pour déterminer un score de similarité ;
- valider la reconnaissance si le score de similarité est supérieur à un seuil prédéterminé.

Les caractéristiques biométriques mémorisées peuvent être enregistrées :
- dans un support de données personnelles porté par l'utilisateur, comme une carte à circuit intégré, un passeport ou autre ; ou
- dans une base de données mettant en relation des caractéristiques biométriques et des données d'identification d'individus autorisés, des droits d'accès à un système informatique ou autre.

Les caractéristiques biométriques mémorisées ont été extraites et enregistrées lors d'une étape préalable d'enrôlement de l'individu.

Il est désormais courant que des personnes portent des lentilles décoratives ou cosmétiques dont la fonction est de masquer au moins partiellement l'iris pour en modifier l'aspect. L'utilisation de telles lentilles cosmétiques peut fausser la reconnaissance biométrique en particulier si le candidat à la reconnaissance porte des lentilles dont le motif est une reproduction de l'aspect des iris d'un autre individu que le candidat à la reconnaissance.

On connaît du document « Detection of Contact-Lens-Based Iris Biometric Spoofs Using Stéréo Imaging » de Ken Hughes et Kevin W.Bowyer (Hawaii international conférence on system sciences) un procédé permettant de détecter si une personne porte ou non des lentilles cosmétiques. Le procédé consiste à estimer, à partir de deux images capturées selon deux orientations différentes, la forme 3D d'une région d'un iris pour déterminer si elle provient de la surface naturelle d'un iris ou de celle d'une lentille.

On connaît également du document US 2017/103276 un procédé de reconnaissance d'un iris consistant à capturer, selon une même direction, une pluralité d'images d'un œil en faisant varier l'éclairage pour déterminer la présence d'une caractéristique dans l'iris indiquant que l'iris est réel.

On connaît aussi du document US 2018/005009 un procédé de détection de tentative de fraude envers un système de reconnaissance d'iris. Le procédé comprend la capture d'une première image d'un iris en spectre de lumière visible et d'une deuxième image dudit iris en spectre proche infrarouge permettant de générer un signal représentatif d'une suspicion de détection de tentative de fraude.

### OBJET DE L'INVENTION

Un but de l'invention est de fournir un moyen pour améliorer la fiabilité des procédés de reconnaissance biométrique à partir des iris.

### BREF EXPOSE DE L'INVENTION

A cet effet, on prévoit, selon l'invention, un procédé de vérification d'authenticité d'un iris d'un œil d'un candidat à une reconnaissance biométrique à partir d'une image d'iris, comprenant les étapes de :
- capturer, au moyen d'au moins un capteur optique, une première image et une deuxième image de l'œil du candidat selon respectivement une première orientation et une deuxième orientation relatives de l'œil par rapport au capteur d'image ;
- détecter dans la première image et dans la deuxième image des points caractéristiques homologues correspondant à des points qui sont situés sur un pourtour de motifs caractéristiques de l'iris de l'œil et qui sont visibles sur la première image et la deuxième image ;
- déterminer un écart résiduel entreles points caractéristiques homologues de la première image et les points caractéristiques homologues de la deuxième image après application d'au moins une homographie aux points caractéristiques homologues de la deuxième image, ladite homographie étant déterminée pour permettre d'aligner les points caractéristiques homologues de la deuxième image avec les points caractéristiques homologues de la première image ;
- considérer que l'iris est authentique lorsque l'écart résiduel est inférieur à un seuil prédéterminé.

Le procédé de l'invention permet de vérifier que l'iris représenté sur deux images avec des orientations différentes est bien réel et n'est donc pas une reproduction d'iris apposée sur une lentille décorative. L'iris d'un œil est plan de sorte que la forme d'un motif formé par des points caractéristiques homologues dans la première image sera identique à la forme du motif formé par ces mêmes points caractéristiques homologues dans la deuxième image, à une homographie près. La lentille cosmétique recouvre une portion de la surface de l'œil de sorte que les points caractéristiques homologues sont positionnés non pas sur un plan mais sur une surface sensiblement en calotte sphérique. Un motif formé par des points homologues dans la première image, par exemple une ligne droite, n'aura pas la même forme dans la deuxième image, le motif aura la forme d'une ligne courbe. Il n'y a donc pas de projection planaire permettant de passer du premier motif au second.

De préférence, l'homographie appliquée aux points caractéristiques homologues de la deuxième image est une projection planaire.

Ceci permet de limiter le risque de faux rejet.

Avantageusement, le seuil prédéterminé est défini en tenant compte d'une déformation induite par le cristallin selon l'orientation de l'œil.

L'invention a également pour objet un procédé et un dispositif de reconnaissance biométrique mettant en œuvre ce procédé de détection de lentille cosmétique.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique d'un dispositif de reconnaissance biométrique selon l'invention ;
- la figure 2 est une vue schématique d'un œil dépourvu d'une lentille cosmétique
- la figure 3 est une vue schématique d'un œil pourvu d'une lentille cosmétique.

### DESCRIPTION DETAILLEE DE L'INVENTION

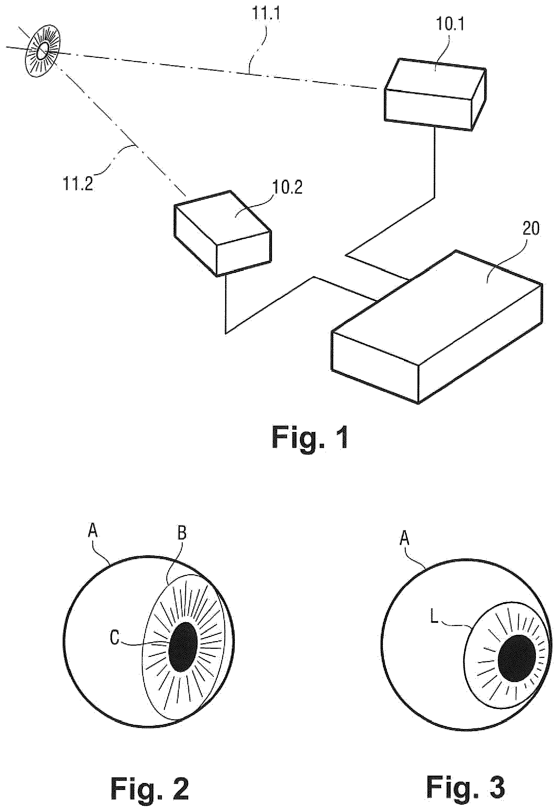

En référence aux figures, l'invention est ici décrite en application à la reconnaissance biométrique d'individus à partir d'un iris B d'un de leurs yeux A (figure 2).

L'invention concerne un dispositif de reconnaissance biométrique, comprenant deux capteurs optiques 10.1, 10.2 qui sont orientés l'un par rapport à l'autre pour couvrir une même zone de capture, ici représentée par un iris, et avoir des lignes de visée 11.1, 11.2 sécantes dans ladite zone de capture. Les capteurs optiques 10.1, 10.2 sont ici des capteurs CCD ou des capteurs à photodiodes ou à phototransistors.

Les capteurs optiques 10.1, 10.2 sont reliés à une unité électronique de commande 20 qui comprend un processeur et une mémoire contenant notamment un programme comportant des instructions pour commander les capteurs optiques 10.1, 10.2 et mettre en œuvre le procédé de reconnaissance selon l'invention.

Le procédé de reconnaissance biométrique d'un candidat comprend les étapes de :
- vérifier l'authenticité de l'iris sur un œil du candidat ;
- extraire des caractéristiques biométriques d'au moins une image de l'iris du candidat ;
- comparer les caractéristiques biométriques extraites à des caractéristiques biométriques mémorisées pour déterminer un score de similarité ;
- valider la reconnaissance si le score de similarité est supérieur à un seuil prédéterminé.

La vérification d'authenticité vise à s'assurer que l'iris est un iris réel et non un iris reproduit sur une lentille décorative L (figure 3). On peut voir sur les figures 2 et 3 qu'un iris B authentique est plan (figure 2) alors qu'une lentille décorative L est en forme de calotte sphérique (figure 3).

Le procédé de vérification de l'authenticité de l'iris, comprend les étapes de :
- capturer, au moyen des deux capteurs optiques 10.1, 10.2, une première image et une deuxième image de l'œil du candidat selon respectivement une première orientation et une deuxième orientation relatives de l'œil par rapport au capteur d'image ;
- détecter dans la première image et dans la deuxième image des points caractéristiques homologues ;
- vérifier que les points caractéristiques homologues de la première image correspondent aux points caractéristiques homologues de la deuxième image après application d'une homographie aux points caractéristiques homologues de la deuxième image ;
- considérer que l'iris est authentique lorsque la vérification est positive.

Les points caractéristiques homologues sont des points, au sens géométrique du terme, qui sont situés notamment sur le pourtour de motifs caractéristiques de l'iris et qui sont visibles sur les deux images. Les motifs sont des hétérogénéités d'aspect qui peuvent avoir la forme de tâches, de lignes ou autres. La détection des points caractéristiques est effectuée par l'unité électronique de commande 20 qui met en œuvre un algorithme de détection connu en lui-même. Cet algorithme de détection est par exemple du type SIFT (de l'anglais « Scale Invariant Feature Transform »).

L'opération de vérification consiste à vérifier que la figure formée par les points caractéristiques homologues de la première image (la première figure originale) peut être obtenue en appliquant une homographie à la figure formée par les points caractéristiques homologues de la deuxième image (la deuxième figure originale). La détermination d'une homographie permettant d'aligner deux ensembles de points homologues est connue de l'homme de l'art (cf. par exemple : Torr, P. H., et Zisserman, A., Feature based methods for structure and motion estimation, International workshop on vision algorithms (pp. 278-294), Septembre 1999, Springer, Berlin, Heidelberg). Ainsi, par exemple, plusieurs homographies vont être essayées. L'application de chaque homographie à la deuxième figure originale va donner une deuxième figure résultat. Chaque deuxième figure résultat va être comparée à la première figure originale et, si les deux figures ne sont pas parfaitement identiques, un écart résiduel est déterminé. La vérification est considérée comme positive lorsque l'écart résiduel est inférieur à un seuil prédéterminé. Le seuil prédéterminé est défini en tenant compte d'une déformation induite par le cristallin selon l'orientation de l'œil. On sait en effet que le cristallin dont la surface extérieure est courbe peut induire une légère déformation de l'aspect visuel de l'iris.

Pour améliorer la précision de la détermination du seuil, on prend en compte l'angle entre les deux directions de visée 11.1, 11.2. Cet angle peut être mémorisé tel quel ou est déterminé à partir de la position des capteurs optiques 10.1, 10.2 par triangulation.

On notera que, dans certains cas, il pourra être avantageux de compenser au préalable des distorsions de l'image (distorsions radiales, tangentielles, etc.).

En variante, il est possible d'utiliser un algorithme de matching biométrique pour déterminer déterminer des points homologues (en alternative à la méthode SIFT).

Bien entendu, l'invention n'est pas limitée aux modes de réalisation décrits mais englobe toute variante entrant dans le champ de l'invention telle que définie par les revendications.

En particulier, la capture d'images peut être effectuée au moyen d'un seul capteur optique, en demandant au candidat de déplacer son œil entre les deux captures d'image. A cet effet, on peut par exemple demandé au candidat de regarder dans une première direction pour la capture de la première image puis dans une seconde direction pour la capture de la deuxième image. Ces deux directions peuvent être « matérialisées » par l'affichage sur un écran, successivement et en deux zones de l'écran écartées l'une de l'autre, d'un symbole que le candidat doit fixer du regard.

En variante, le procédé de vérification d'authenticité peut comprendre une étape de transformer chaque image en une représentation en coordonnées polaires avant de rechercher les points caractéristiques homologues.

Les caractéristiques biométriques utilisées pour la reconnaissance biométrique peuvent être extraites de la première image, et/ou de la deuxième image et/ou d'une troisième image capturée spécifiquement à cette fin. Les images peuvent être capturées dans une même plage de longueurs d'onde ou dans des plages différentes.

## Revendications

1. Procédé de vérification d'authenticité d'un iris d'un œil d'un candidat à une reconnaissance biométrique à partir d'une image d'iris, comprenant les étapes de :
- capturer, au moyen d'au moins un capteur optique, une première image et une deuxième image de l'oeil du candidat selon respectivement une première orientation et une deuxième orientation relatives de l'oeil par rapport au capteur d'image ;
- détecter dans la première image et dans la deuxième image des points caractéristiques homologues correspondant à des points qui sont situés sur un pourtour de motifs caractéristiques de l'iris de l'oeil et qui sont visibles sur la première image et la deuxième image ;
- déterminer un écart résiduel entre les points caractéristiques homologues de la première image et les points caractéristiques homologues de la deuxième image après application d'au moins une homographie aux points caractéristiques homologues de la deuxième image, ladite homographie étant déterminée pour permettre d'aligner les points caractéristiques homologues de la deuxième image avec les points caractéristiques homologues de la première image ;
- considérer que l'iris est authentique lorsque l'écart résiduel est inférieur à un seuil prédéterminé.

2. Procédé selon la revendication 1, comprenant une étape de transformer chaque image en une représentation en coordonnées polaires avant de rechercher les points homologues.

3. Procédé selon l'une quelconque des revendications précédentes, dans lequel l'homographie appliquée aux points caractéristiques homologues de la deuxième image est une projection planaire.

4. Procédé selon la revendication 3, dans lequel le seuil prédéterminé est défini en tenant compte d'une déformation induite par le cristallin selon l'orientation de l'œil.

5. Procédé selon l'une quelconque des revendications précédentes, dans lequel la capture d'images est effectuée en demandant au candidat de déplacer son œil entre les deux captures d'image.

6. Procédé selon l'une quelconque des revendications 1 à 4, dans lequel la capture d'images est effectuée en utilisant deux capteurs optiques ayant des lignes de visée sécantes sensiblement dans une zone de capture commune des capteurs optiques.

7. Procédé de reconnaissance biométrique comprenant les étapes de :
- vérifier l'authenticité de l'iris sur un œil du candidat en mettant en œuvre le procédé selon l'une quelconque des revendications précédentes et, si la vérification est positive ;
- extraire des caractéristiques biométriques d'au moins une image de l'iris du candidat ;
- comparer les caractéristiques biométriques extraites à des caractéristiques biométriques mémorisées pour déterminer un score de similarité ;
- valider la reconnaissance si le score de similarité est supérieur à un seuil prédéterminé.

8. Procédé selon la revendication 7, dans lequel l'image dont sont extraites les caractéristiques biométriques est la première image ou la deuxième image.

9. Procédé selon la revendication 7, dans lequel l'image dont sont extraites les caractéristiques biométriques est une troisième image.

10. Dispositif de reconnaissance biométrique, comprenant au moins un capteur optique relié à une unité électronique de commande comportant un processeur et une mémoire qui contient un programme comportant des instructions pour commander le capteur optique de manière à mettre en œuvre le procédé de reconnaissance selon l'une quelconque des revendications 7 à 9.

11. Dispositif selon la revendication 10, comprenant deux capteurs optiques orientés l'un par rapport à l'autre pour couvrir une même zone de capture et avoir des lignes de visée sécantes dans ladite zone de capture.

## Patentansprüche

1. Verfahren zur Authentizitätsprüfung einer Iris eines Auges eines Kandidaten für eine biometrische Erkennung ausgehend von einem Irisbild, das die folgenden Schritte enthält:
- Erfassen, mittels mindestens eines optischen Sensors, eines ersten Bilds und eines zweiten Bilds des Auges des Kandidaten gemäß einer ersten bzw. einer zweiten relativen Ausrichtung des Auges bezüglich des Bildsensors;
- Erkennen im ersten Bild und im zweiten Bild von homologen charakteristischen Punkten, die Punkten entsprechen, die sich auf einem Umfang von charakteristischen Mustern der Iris des Auges befinden und die auf dem ersten Bild und dem zweiten Bild sichtbar sind;
- Bestimmen einer Restabweichung zwischen den homologen charakteristischen Punkten des ersten Bilds und den homologen charakteristischen Punkten des zweiten Bilds nach Anwendung mindestens einer Homographie an die homologen charakteristischen Punkte des zweiten Bilds, wobei die Homographie bestimmt wird, um zu ermöglichen, die homologen charakteristischen Punkte des zweiten Bilds mit den homologen charakteristischen Punkten des ersten Bilds auszurichten;
- die Iris als authentisch betrachten, wenn die Restabweichung geringer ist als eine vorbestimmte Schwelle.

2. Verfahren nach Anspruch 1, das einen Schritt der Umformung jedes Bilds in eine Darstellung in Polarkoordinaten enthält, ehe die homologen Punkte gesucht werden.

3. Verfahren nach einem der vorhergehenden Ansprüche, wobei die an die homologen charakteristischen Punkte des zweiten Bilds angewendete Homographie eine planare Projektion ist.

4. Verfahren nach Anspruch 3, wobei die vorbestimmte Schwelle unter Berücksichtigung einer durch die Linse induzierten Verformung gemäß der Ausrichtung des Auges definiert wird.

5. Verfahren nach einem der vorhergehenden Ansprüche, wobei die Bilderfassung ausgeführt wird, indem der Kandidat aufgefordert wird, sein Auge zwischen den zwei Bilderfassungen zu bewegen.

6. Verfahren nach einem der Ansprüche 1 bis 4, wobei die Bilderfassung ausgeführt wird, indem zwei optische Sensoren verwendet werden, die im Wesentlichen in einer gemeinsamen Erfassungszone der optischen Sensoren sich schneidende Sichtlinien haben.

7. Verfahren zur biometrischen Erkennung, das die Schritte enthält:
- Prüfen der Authentizität der Iris an einem Auge des Kandidaten mittels Durchführung des Verfahrens nach einem der vorhergehenden Ansprüche, und wenn die Prüfung positiv ist;
- Entnahme von biometrischen Merkmalen aus mindestens einem Bild der Iris des Kandidaten;
- Vergleich der entnommenen biometrischen Merkmale mit gespeicherten biometrischen Merkmalen, um einen Ähnlichkeitsscore zu bestimmen;
- Validieren der Erkennung, wenn der Ähnlichkeitsscore höher ist als eine vorbestimmte Schwelle.

8. Verfahren nach Anspruch 7, wobei das Bild, aus dem die biometrischen Merkmale entnommen werden, das erste Bild oder das zweite Bild ist.

9. Verfahren nach Anspruch 7, wobei das Bild, aus dem die biometrischen Merkmale entnommen werden, ein drittes Bild ist.

10. Vorrichtung zur biometrischen Erkennung, die mindestens einen optischen Sensor enthält, der mit einer elektronischen Steuereinheit verbunden ist, die einen Prozessor und einen Speicher aufweist, der ein Programm enthält, das Anweisungen zur Steuerung des optischen Sensors aufweist, um das Erkennungsverfahren nach einem der Ansprüche 7 bis 9 durchzuführen.

11. Vorrichtung nach Anspruch 10, die zwei optische Sensoren enthält, die zueinander ausgerichtet sind, um eine gleiche Erfassungszone abzudecken und in der Erfassungszone sich schneidende Sichtlinien zu haben.

## Claims

1. Method for verifying the authenticity of an iris of an eye of a candidate for biometric recognition on the basis of an iris image, comprising the steps of:
- capturing, by means of at least one optical sensor, a first image and a second image of the eye of the candidate according to a first and a second relative orientation, respectively, of the eye with respect to the image sensor;
- detecting, in the first image and in the second image, homologous characteristic points corresponding to points which are located on a periphery of characteristic patterns of the iris of the eye and which are visible in the first image and in the second image;
- determining a residual distance between the homologous characteristic points of the first image and the homologous characteristic points of the second image after applying at least one homography to the homologous characteristic points of the second image, said homography being determined so as to make it possible to align the homologous characteristic points of the second image with the homologous characteristic points of the first image;
- considering that the iris is authentic when the residual distance is below a predetermined threshold.

2. Method according to Claim 1, comprising a step of transforming each image into a representation in polar coordinates before searching for the homologous points.

3. Method according to either one of the preceding claims, wherein the homography applied to the homologous characteristic points of the second image is a planar projection.

4. Method according to Claim 3, wherein the predetermined threshold is defined taking into account a deformation induced by the lens according to the orientation of the eye.

5. Method according to any one of the preceding claims, wherein images are captured by asking the candidate to move their eye between the two image captures.

6. Method according to any one of Claims 1 to 4, wherein images are captured using two optical sensors having secant lines of sight substantially in a shared capture zone of the optical sensors.

7. Biometric recognition method comprising the steps of:
- verifying the authenticity of the iris in an eye of the candidate by implementing the method according to any one of the preceding claims and, if the verification is positive;
- extracting biometric characteristics from at least one image of the iris of the candidate;
- comparing the extracted biometric characteristics with stored biometric characteristics so as to determine a similarity score;
- confirming the recognition if the similarity score is above a predetermined threshold.

8. Method according to Claim 7, wherein the image from which the biometric characteristics are extracted is the first image or the second image.

9. Method according to Claim 7, wherein the image from which the biometric characteristics are extracted is a third image.

10. Biometric recognition device, comprising at least one optical sensor connected to an electronic control unit comprising a processor and a memory which contains a program comprising instructions for controlling the optical sensor so as to implement the recognition method according to any one of Claims 7 to 9.

11. Device according to Claim 10, comprising two optical sensors oriented with respect to one another so as to cover the same capture zone and have secant lines of sight in said capture zone.
